(19) 

Europäisches
Patentamt
European
Patent Office
Office européen
des brevets

(11) **EP 3 056 261 A1**

(12) **EUROPEAN PATENT APPLICATION**
published in accordance with Art. 153(4) EPC

(43) Date of publication:
**17.08.2016 Bulletin 2016/33**

(21) Application number: **14851900.2**

(22) Date of filing: **09.10.2014**

(51) Int Cl.:
***B01D 69/08*** (2006.01)  ***B01D 69/10*** (2006.01)
***B01D 69/12*** (2006.01)  ***B01D 71/34*** (2006.01)

(86) International application number:
**PCT/JP2014/077072**

(87) International publication number:
**WO 2015/053366 (16.04.2015 Gazette 2015/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **11.10.2013 JP 2013213674**

(71) Applicant: **Mitsubishi Rayon Co., Ltd.**
**Tokyo 100-8253 (JP)**

(72) Inventors:
• **TAKAHASHI Shusaku**
  **Toyohashi-shi**
  **Aichi 440-8601 (JP)**

• **TERAMACHI Masashi**
  **Toyohashi-shi**
  **Aichi 440-8601 (JP)**
• **HINENOYA Takashi**
  **Toyohashi-shi**
  **Aichi 440-8601 (JP)**

(74) Representative: **Hoffmann Eitle**
**Patent- und Rechtsanwälte PartmbB**
**Arabellastraße 30**
**81925 München (DE)**

(54) **HOLLOW POROUS MEMBRANE**

(57) A hollow porous membrane including a porous membrane layer having a hole on an outer surface, wherein a membrane thickness of the porous membrane layer is 70 μm or more, and the porous membrane layer has a region A, the correlation between a depth X (μm) and an average pore size Y (μm) of holes on a cutting plane at the depth X (μm) satisfies a regression line Y = aX + b in the case of cutting an outer surface of the porous membrane layer by the depth X (μm) in the region A, a slope a of the regression line is $0 < a \leq 0.08$ and a coefficient of determination $R^2$ of the regression line is 0.90 or more, and a, b, and $R^2$ are determined by the following Equations (2'), Equation (3'), and Equation (4'), respectively.

FIG. 1

**Description**

TECHNICAL FIELD

The present invention relates to a hollow porous membrane.
This application is based upon and claims the benefit of priority of the prior Japanese Patent Application No. 2013-213674, filed in Japan on October 11, 2013, the entire contents of which are incorporated herein by reference.

BACKGROUND ART

In recent years, water treatment using a filtration membrane which exhibits excellent fractionation performance, compactness, and the like has attracted attention as the interest in environmental issues has increased and also the regulations on water quality has been strengthened. As the filtration membrane used in water treatment, there is a hollow porous membrane, for example.
The hollow porous membrane is required to exhibit not only excellent water permeability and fractionation performance but also high durability. As the hollow porous membrane exhibiting excellent durability, a hollow porous membrane (hereinafter, referred to as the composite hollow fiber membrane in some cases) is known in which a porous membrane layer is provided on the outer peripheral surface of a support consisting of a cylindrical knitted string obtained by circular knitting a yarn.
The composite hollow fiber membrane is manufactured by ejecting a membrane-forming stock solution through a double tube spinning nozzle when the support continuously passes through the double tube spinning nozzle, coating the outer peripheral surface of the support with the membrane-forming stock solution on, and then allowing the support coated with the membrane-forming stock solution to pass through the coagulation bath to coagulate the membrane-forming stock solution with the coagulating liquid in the coagulation bath.
There are various water such as sewage and waste water or purified water as the raw water to be treated to be the target of the water treatment, and the raw water to be treated contains inorganic particles or the like in some cases.
The inorganic particles in the raw water to be treated or the activated carbon or the like introduced for odor control comes in contact with the hollow porous membrane when the raw water to be treated is subjected to the water treatment. In particular, the inorganic particles, the activated carbon, or the like in the raw water to be treated violently collides with the hollow porous membrane when the air scrubbing treatment is conducted. As a result, a problem is caused that the water treatment efficiency is decreased by the damage of the outer surface such that the fractionation performance deteriorates as the surface of the hollow fiber porous membrane is worn or the water permeability deteriorates as opening on the surface is crushed.
In order to cope with such a problem, for example, a porous membrane having a dense layer at least on one of the surfaces of the porous membrane and in the inside of the porous membrane has been proposed (Patent Document 1).
In addition, a composite hollow fiber membrane has been proposed which is formed by a three-dimensional network structure, a dense intermediate layer which follows it, and a support layer having a spherical structure to support it (Patent Document 2).
The inventions of Patent Documents 1 and 2 are intended to prevent the performance deterioration caused during the water treatment by providing a dense layer.
Alternatively, a porous hollow fiber membrane has been proposed in which the weight average molecular weight of the thermoplastic resin constituting one layer on the inner surface side of the porous hollow fiber membrane is less than 400,000 and the weight average molecular weight of the thermoplastic resin constituting one layer on the outer layer surface of the porous hollow fiber membrane is 400,000 or more (Patent Document 3).
According to the invention of Patent Document 3, it is intended to prevent the abrasion by constituting one layer on the outer layer surface of the porous hollow fiber membrane with a thermoplastic resin having a weight average molecular weight of 400,000 or more.
A composite hollow fiber membrane is presented in Patent Document 4 which consists of a dense skin layer and an inner layer having a sponge structure and has a structure in which the pore size gradually increases toward the center of the hollow fiber membrane and in which the fractionation performance of Hemocyanin against the friction or the like due to the aeration is maintained.
In addition, a porous membrane is presented in Patent Document 5 which has a structure without macrovoids by the use of polyvinylidene fluoride having a melt viscosity of 45 KPoise or more and an excellent filtration flow rate and fractionation characteristics.

CITATION LIST

PATENT DOCUMENT

Patent Document 1: JP 2006-224051 A

Patent Document 2: JP 2009-240899 A

Patent Document 3: JP 2009-219979 A

Patent Document 4: JP 2003-225542 A

Patent Document 5: JP 2012-82396 A

SUMMARY OF THE INVENTION

PROBLEM TO BE SOLVED BY THE INVENTION

However, in the invention of Patent Documents 1 and 2, clogging is likely to occur inside the membrane since the layer with a small pore size that is a layer responsible for the fractionation performance is inside the membrane. For this reason, there is a problem that the water treatment efficiency decreases when the membrane is used over a long period of time. In addition, in the invention of Patent Document 2, the water permeability deteriorates after the abrasion test.

In addition, in the invention of Patent Document 3, the maintenance and improvement of fractionation performance is not considered although the improvement of abrasion resistance is achieved.

In the invention of Patent Document 4, the wear considered is the wear due to the contact between the membranes and the contact of the membrane with the inorganic particles or the like that is considered in the present application is not considered.

In the invention of Patent Document 5, macrovoids are generated in the case of using the Kynar761A in Comparative Example 3. From this fact, it can be said that the optimization of the method for manufacturing a hollow porous membrane in Patent Document 5 is not sufficient.

Accordingly, an object of the invention of the present application is to provide a hollow porous membrane capable of achieving both of excellent water permeability and excellent fractionation performance over a long period of time.

MEANS FOR SOLVING PROBLEM

The invention has the following aspects.

[1] A hollow porous membrane having on an outer surface formed of a porous membrane layer having a hole formed thereon, in which a membrane thickness of the porous membrane layer is 70 $\mu$m or more and a region with a membrane thickness of 70 $\mu$m or more has a coefficient of determination $R^2$ of a regression line determined by the following Equation (4) of 0.90 or more and a slope a of the regression line of $0 < a \leq 0.08$ in the case of determining the regression line $Y = aX + b$ between a depth X ($\mu$m) obtained by cutting the outer surface through collision of a slurry containing inorganic particles and an average pore size Y ($\mu$m) of holes on a surface appearing when cutting by X ($\mu$m) by the following Equations (2) and (3).
[Mathematical Formula 1]

$$b = \frac{\sum_{i=1}^{n} X_i Y_i - n\overline{X}\,\overline{Y}}{\sum_{i=1}^{n} X_i^2 - n\overline{X}^2} \quad \cdots (2)$$

$$a = \overline{Y} - b\overline{X} \qquad \cdots (3)$$

$\overline{X}$ and Y represent the sample mean of $X_i$ and $Y_i$, respectively

[Mathematical Formula 2]

$$R^2 = \frac{\sum_{i=1}^{n}(\hat{Y}_i - \overline{Y})^2}{\sum_{i=1}^{n}(Y_i - \overline{Y})^2} \qquad \cdots (4)$$

Here, $\hat{Y}_i = a + bX_i$ is satisfied.

[2] The hollow porous membrane according to [1], in which the region having a membrane thickness of 70 μm or more is a region starting from the outer surface.

[3] The hollow porous membrane according to [1] or [2], in which a maximum pore size of holes on a surface appearing when cutting from the outer surface to a depth of from 50 to 70 μm is less than 10 μm.

[4] The hollow porous membrane according to any one of [1] to [3], in which the porous membrane layer is composed of polyvinylidene fluoride.

[5] The hollow porous membrane according to [4], in which a mass average molecular weight (Mw) of polyvinylidene fluoride is $2.0 \times 10^5$ or more and $1.2 \times 10^6$ or less.

[6] The hollow porous membrane according to [4] or [5], in which particles of 0.022 μm or more is $1.2 \times 10^{16}$ particles/$cm^3$ or less in a N,N-dimethylacetamide solution containing polyvinylidene fluoride at 5% by mass.

[7] The hollow porous membrane according to any one of [4] to [6], in which a molecular weight distribution (Mw/Mn) of polyvinylidene fluoride is 4.0 or less.

[8] The hollow porous membrane according to any one of [1] to [7], including a tubular support, in which the porous membrane layer is formed on an outer peripheral surface of the support.

[9] The hollow porous membrane according to [8], in which the support is a hollow string-like material obtained by processing a filament into a hollow cylindrical shape.

[10] The hollow porous membrane according to [11], in which the hollow string-like material obtained by processing a filament into a hollow cylindrical shape is a cylindrical knitted string support obtained by knitting a fiber into a cylindrical shape and subjecting the knitted string to a heat treatment.

[11] The hollow porous membrane according to [10], in which the filament is composed of polyester.

[12] The hollow porous membrane according to [10] or [11], in which the filament is a multifilament.

[13] The hollow porous membrane according to [12], in which a fineness of the multifilament is from 20 to 500 dtex.

[14] The hollow porous membrane according to any one of [1] to [13], in which an outer diameter of the hollow porous membrane is from 0.8 to 5 mm.

[15] A method for manufacturing a hollow porous membrane that is manufactured using a membrane-forming stock solution composed of a thermoplastic resin and a solvent, the membrane-forming stock solution having a turbidity of 30 NTU or less.

In other words, the invention relates to the following aspects.

[1'] A hollow porous membrane including a porous membrane layer having a hole on an outer surface, in which a membrane thickness of the porous membrane layer is 70 μm or more, and

the porous membrane layer has a region A,

the correlation between a depth X (μm) and an average pore size Y (μm) of holes on a cutting plane at the depth X (μm) satisfies a regression line Y = aX + b in the case of cutting an outer surface of the porous membrane layer by the depth X (μm),

a slope a of the regression line is $0 < a \leq 0.08$ and a coefficient of determination $R^2$ of the regression line is 0.90 or more, and

a, b, and $R^2$ are determined by the following Equations (2'), Equation (3'), and Equation (4'), respectively.

[Mathematical Formula 3]

$$b = \frac{\sum_{i=1}^{n} X_i Y_i - n\overline{X}\,\overline{Y}}{\sum_{i=1}^{n} X_i^2 - n\overline{X}^2} \quad \cdots (2')$$

$$a = \overline{Y} - b\overline{X} \quad \cdots (3')$$

$\overline{X}$ and Y represent the sample mean of $X_i$ and $Y_i$, respectively.

[Mathematical Formula 4]

$$R^2 = \frac{\sum_{i=1}^{n} (\hat{Y}_i - \overline{Y})^2}{\sum_{i=1}^{n} (Y_i - \overline{Y})^2} \quad \cdots (4')$$

Here, $\hat{Y}_i = a + bX_i$ is satisfied.

[2'] The hollow porous membrane according to [1'], in which the membrane region A is formed from the outer surface toward the inside of the porous membrane layer.

[3'] The hollow porous membrane according to [1'] or [2'], in which a maximum pore size of holes on a cutting plane at a depth of from 50 to 70 $\mu$m is less than 10 $\mu$m when the hollow porous membrane is cut at the depth.

[4'] The hollow porous membrane according to any one of [1'] to [3'], in which the porous membrane layer is composed of polyvinylidene fluoride.

[5] The hollow porous membrane according to [4'], in which a mass average molecular weight (Mw) of polyvinylidene fluoride is $2.0 \times 10^5$ or more and $1.2 \times 10^6$ or less.

[6'] The hollow porous membrane according to [4'] or [5'], in which the hollow porous membrane is manufactured using a N,N-dimethylacetamide solution containing polyvinylidene fluoride at 5% by mass with respect to a total mass and particles having a particle size of 0.022 $\mu$m or more by $1.2 \times 10^{16}$ particles/cm$^3$ or less.

[7'] The hollow porous membrane according to any one of [4'] to [6'], in which a molecular weight distribution (Mw/Mn) of polyvinylidene fluoride is 4.0 or less.

[8'] The hollow porous membrane according to any one of [1'] to [7'], including a cylindrical support, in which the porous membrane layer is formed on an outer periphery of the support.

[9'] The hollow porous membrane according to [8'], in which the support is a hollow cylindrical string-like material including a filament.

[10'] The hollow porous membrane according to [9'], in which the support is a cylindrical knitted string support obtained by knitting a fiber into a cylindrical shape and subjecting the knitted string to a heat treatment.

[11'] The hollow porous membrane according to [10'], in which the filament is composed of polyester.

[12'] The hollow porous membrane according to [10'] or [11'], in which the filament is a multifilament.

[13'] The hollow porous membrane according to [12'], in which a fineness of the multifilament is from 20 to 500 dtex.

[14'] The hollow porous membrane according to any one of [1'] to [13'], in which an outer diameter of the hollow porous membrane is from 0.8 to 5 mm.

[15'] A method for manufacturing a hollow porous membrane that is manufactured using a membrane-forming stock solution containing a thermoplastic resin and a solvent, the membrane-forming stock solution having a turbidity of 30 NTU or less.

EFFECT OF THE INVENTION

According to the hollow porous membrane of the invention, it is possible to achieve both of excellent water permeability and excellent fractionation performance over a long period of time.

BRIEF DESCRIPTION OF DRAWINGS

Fig. 1 is a cross-sectional diagram perpendicular to the longitudinal direction illustrating an example of a hollow porous membrane that is an embodiment of the invention;

Fig. 2 is a schematic diagram illustrating an example of an apparatus for manufacturing a support according to a hollow porous membrane that is an embodiment of the invention;

Fig. 3 is a schematic diagram illustrating an example of an apparatus for manufacturing a precursor of a hollow porous membrane that is an embodiment of the invention;

Fig. 4 is an image (magnification of image = 300-fold) of activated carbon used in the air scrubbing test taken using an electron microscope; and

Fig. 5 is an image (magnification of image = 100-fold) of a hollow porous membrane having a defect point caused after the air scrubbing test taken using an electron microscope.

MODE(S) FOR CARRYING OUT THE INVENTION

(Hollow porous membrane)

One aspect of the hollow porous membrane that is an embodiment of the invention is a hollow porous membrane which is substantially cylindrical and is equipped with a porous membrane layer having holes on the outer surface thereof.

Another aspect of the hollow porous membrane that is an embodiment of the invention is a hollow porous membrane which is substantially cylindrical and has a hollow support and a porous membrane layer having holes and in which the outer peripheral surface of the support is covered with the porous membrane layer.

The term "substantially cylindrical" referred to herein means that the shape of an arbitrary cross-section perpendicular to the longitudinal direction is a three-dimensional shape of an oval shape such as a true circular shape, an egg shape, an oblong shape, or an elliptical shape.

An example of the hollow porous membrane that is an embodiment of the invention will be described with reference to the drawings.

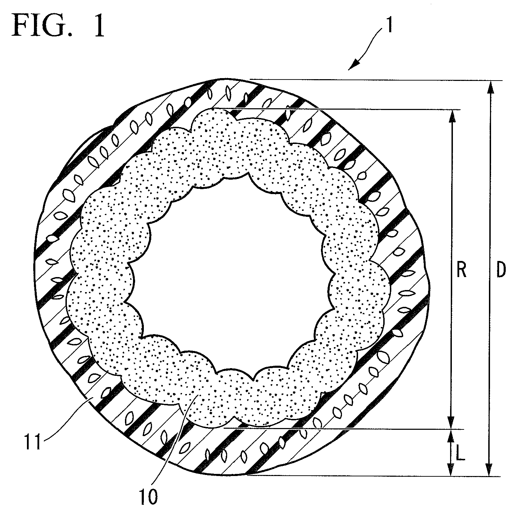

A hollow porous membrane 1 illustrated in Fig. 1 is a composite hollow fiber membrane equipped with a hollow support 10 and a porous membrane layer 11 that covers the outer peripheral surface of the support 10.

In other words, one aspect of the hollow porous membrane that is an embodiment of the invention is a composite hollow fiber membrane which has a hollow support and a porous membrane layer having holes and in which the outer peripheral surface of the support is covered with the porous membrane layer.

Here, the expression "the outer peripheral surface of the support is covered with the porous membrane layer" means that a region consisting of a porous membrane is formed on the outer periphery of the support, and the region consisting of a porous membrane may be incorporated into the support.

Incidentally, the term "hollow porous membrane layer" in the case of being equipped with a hollow support means a region consisting of a hollow porous membrane that is formed on the outer peripheral surface of the support, and it does not include the region which is incorporated into the support.

The outer diameter D of the hollow porous membrane 1 is preferably from 0.8 to 5 mm and more preferably from 1.0 to 3.5 mm. It is concerned that the filling amount of the membrane decreases when the membrane is modularized when the outer diameter exceeds the above upper limit value, and it is concerned that the inner diameter decreases and the flow rate decreases by the pressure loss caused when the treated water that has been filtered flows inside the support 10 when the outer diameter is less than the above lower limit value.

The term "outer diameter of the hollow porous membrane 1" referred to herein means the maximum value of the distance which connects the two points on the outer edge of the cutting plane when the hollow porous membrane 1 is cut in an arbitrary plane perpendicular to the longitudinal direction. In other words, it means the diameter of the smallest circle inscribed in the outer edge of the cutting plane.

Incidentally, the outer diameter D can be determined as the average value of the outer diameters measured at arbitrary 3 or more and 10 or less locations.

One aspect of the outer diameter D is the average value of the outer diameters at three locations.

<Support>

The support 10 is a support obtained by molding a filament into a tubular shape. Examples of the method for molding a filament into a tubular shape may include a method of a knitted string form in which a filament (one yarn) is circular knitted into a cylindrical shape (hereinafter, referred to as cylindrical in some cases), a method in which the knitted string that is circular knitted into a cylindrical shape is subjected to a heat treatment to impart rigidity, and a method of a knitted string form in which a plurality of filaments are assembled into a cylindrical shape. Among these methods, a method in which the knitted string that is circular knitted into a cylindrical shape is subjected to a heat treatment is preferable from the viewpoint of exhibiting favorable productivity and appropriate stretchability and rigidity. Incidentally, the term "circular knitting" is to knit a tubular transverse knitted fabric using a circular knitting machine, and the term "knitted string obtained by circular knitting a filament into a cylindrical shape" means a knitted string obtained by curving a filament to from a continuous loop extending in a spiral shape and relating these loops to each other in all directions.

One aspect of the support according to the hollow porous membrane that is an embodiment of the invention is a string-like material having a hollow cylindrical shape (hereinafter, referred to as the hollow cylindrical in some cases).

The string-like material having a hollow cylindrical shape may be a cylindrical knitted string support obtained by knitting a fiber into a cylindrical shape and subjecting the knitted fiber to a heat treatment.

Examples of the material for the filament may include a synthetic fiber, a semisynthetic fiber, a regenerated fiber, and a natural fiber. The filament may be a filament obtained by combining plural kinds of fibers.

Examples of the synthetic fiber may include a polyamide-based fiber such as nylon 6, nylon 66, or aromatic polyamide; a polyester-based fiber such as polyethylene terephthalate, polybutylene terephthalate (PET), polylactic acid, or polyglycolic acid; an acrylic fiber such as polyacrylonitrile; a polyolefin-based fiber such as polyethylene or polypropylene; a polyvinyl alcohol-based fiber; a polyvinylidene chloride-based fiber; a polyvinyl chloride-based fiber; a polyurethane-based fiber; a phenol resin-based fiber; a fluorine-based fiber such as polyvinylidene fluoride or polytetrafluoroethylene; and a polyalkylene para-oxybenzoate-based fiber.

Examples of the semisynthetic fiber may include a cellulose derivative-based fiber obtained using cellulose diacetate, cellulose triacetate, chitin, or chitosan as a raw material; a protein-based fiber to be referred to as the promix.

Examples of the regenerated fiber may include a cellulose-based regenerated fiber (rayon, cupra, polynosic, or the like) obtained by a viscose method, a copper-ammonia method, an organic solvent method, or the like.

Examples of the natural fiber may include flax and jute.

Among these, at least one kind selected from the group consisting of a polyester-based fiber, an acrylic fiber, a polyvinyl alcohol-based fibers, a polyamide-based fiber, and a polyolefin-based fiber is preferable from the viewpoint of excellent chemical resistance; and a polyester fiber such as PET is more preferable from the viewpoint of excellent resistance to hypochlorous acid or any salt thereof (for example, sodium hypochlorite) that is used for washing the hollow porous membrane.

Examples of the filament may include a monofilament, a multifilament, and a spun yarn, and among them, a multifilament is preferable.

Here, the term "multifilament" means a filament obtained by twisting several to several tens of fibers. It is easy to control the outer diameter of the support in the case of a multifilament.

Incidentally, the term "filament" means a yarn having a continuous length.

The fineness of the filament can be determined in consideration of the outer diameter and inner diameter of the support, the thickness of the support, and the like, and for example, it is preferably from 20 to 500 dtex and more preferably from 30 to 400 dtex. It is easy to control the outer diameter D of the hollow porous membrane 1 to from 1 to 5 mm when the fineness of the filament is within the above range.

The outer diameter R of the support 10 is preferably from 0.6 to 4.5 mm and more preferably from 0.8 to 3 mm. It is concerned that it is difficult to manufacture the support 10 and the filling amount of the hollow porous membrane 1 decreases when the membrane is modularized when the outer diameter exceeds the above upper limit value. It is concerned that the inner diameter of the support 10 decreases and the flow rate decreases by the pressure loss caused when the treated water that has been filtered flows inside the support 10 when the outer diameter is less than the above lower limit value.

The "outer diameter of the support 10" referred to herein means the maximum value of the distance which connects the two points on the outer edge of the support 10 on the cutting plane when the hollow porous membrane 1 is cut in an arbitrary plane perpendicular to the longitudinal direction. Another aspect of the inner diameter of support 10 is the diameter of the smallest circle inscribed in the outer edge of the support on the cutting plane. The outer diameter R of the support 10 is a numerical value obtained by subtracting the doubled value of the membrane thickness L of the porous membrane layer 11 to be described later from the outer diameter D of the hollow porous membrane 1, and it is expressed as $R = D - 2L$.

Incidentally, the term "inner diameter of the support 10" means the diameter of the largest circle circumscribed around the inner edge of the support 10 in the cutting plane when the hollow porous membrane 1 is cut in an arbitrary plane perpendicular to the longitudinal direction.

Examples of the method for manufacturing a support (namely, circular knitted support) obtained by circular knitting a multifilament into a tubular shape may include a manufacturing method having the following steps (a) and (b).

Step (a): a step of circular knitting a multifilament into a tubular shape.
Step (b): a step of shrinking the circular knitted cylindrical multifilament through a heat treatment.

In other words, one aspect of the method for manufacturing a support (namely, circular knitted support) obtained by circular knitting a multifilament into a tubular shape is a manufacturing method which includes a step of circular knitting a multifilament into a tubular shape (step (a)) and a step of shrinking the circular knitted tubular multifilament through a heat treatment (step (b)).

Hereinafter, an example of the method for manufacturing a support will be described using a method for manufacturing a circular knitted support as an example.

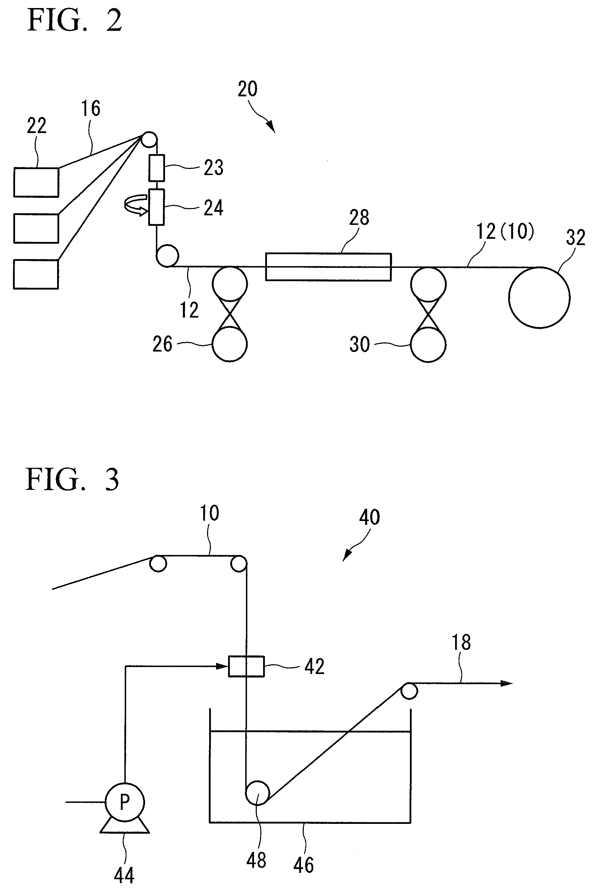

A support manufacturing apparatus 20 illustrated in Fig. 2 is equipped with a plurality of bobbins 22, a tension adjusting device 23, a circular knitting machine 24 for circular knitting a multifilament 16 drawn from the bobbins 22, a string supply device 26 for pulling a cylindrical knitted string 12 knitted by the circular knitting machine 24 at a constant tension, a mold 28 for heat-treating the cylindrical knitted string 12, a take-up device 30 for taking up the cylindrical knitted string 12 subjected to the heat treatment, and a winder 32 for winding the cylindrical knitted string 12 as the hollow string-like support 10 around the bobbins.

The multifilament 16 is drawn from the bobbins 22, and the drawn multifilament 16 is supplied to the circular knitting machine 24 via the tension adjusting device 23. During this time, an arbitrary tension is applied to the multifilament 16 by the tension adjusting device 23.

The multifilament 16 which has been supplied to the circular knitting machine 24 is circular knitted into the cylindrical knitted string 12 (step (a)). The knitting speed of the circular knitting machine 24 slightly varies depending on the shape of the cylindrical knitted string 12, but it is determined by the rotational speed of the cylinder of the circular knitting machine 24. The rotational speed of the cylinder is set, for example, to from 10 to 4000 rpm, and it is preferably from 100 to 3000 rpm from the viewpoint of more stable knitting.

The cylindrical knitted string 12 exhibits stretchability due to its structure. Hence, it is preferable to suppress the stretchability (namely, change in outer diameter) of the cylindrical knitted string 12 by subjecting the cylindrical knitted string 12 to a heat treatment. Accordingly, in the present embodiment, the cylindrical knitted string 12 is subjected to a heat treatment using the mold 28 so that the cylindrical knitted string 12 is hardly deformed.

The cylindrical knitted string 12 knitted by the circular knitting machine 24 is molded using the mold 28 through a heat treatment (step (b)). The cylindrical knitted string 12 (namely, the support 10) subjected to the heat treatment is wound around the winder 32.

The mold 28 has a main body consisting of a metal block, plate, or the like and a heating means. A through hole extending in the traveling direction of the cylindrical knitted string 12 is formed on the main body. Examples of the heating means may include a band heater and a cast-in aluminum heater.

The treatment temperature of the mold 28 depends on the material for the multifilament 16 as well, but it is preferably a temperature that is equal to or higher than (Tm - 80°C) and equal to or lower than the Tm where Tm denotes the melting point (or glass transition temperature) of the material. The treatment temperature t is preferably from 180 to 250°C and more preferably from 190 to 230°C, for example, in a case in which the material for the multifilament 16 is a polyester-based fiber.

Incidentally, in the embodiment described above, the bobbin 22 is three, but the bobbin may be one or four or more. The upper limit value is not particularly limited as long as it is in the practically handleable range from the viewpoint of workability, space, and the like.

In addition, the multifilament 16 may be a composite multifilament supplied from a plurality of bobbins 22. It is possible to supply the multifilament 16 having the desired fineness and the desired number of filaments as the multifilament 16 is a composite multifilament. In addition, the properties of the cylindrical knitted string 12 may be changed by supplying multifilaments which are composed of the same material but have different properties such as heat shrinkability or multifilaments which are composed of different materials as the composite multifilament.

Incidentally, in a case in which the multifilament 16 is a composite multifilament, it is preferable to provide the tension adjusting device 23 for each multifilament in order to properly manage the tension to the multifilament 16.

In addition, the string supply device 26 may not be installed in a case in which the heat shrinkage rate of the multifilament 16 is small. In this case, the tension may be constantly maintained by the heat shrinkage of the cylindrical knitted string 12 as a dancer roll or the like is disposed between the circular knitting machine 24 and the mold 28.

<Porous membrane layer>

The porous membrane layer 11 is a layer having a plurality of holes. The holes which are formed have at least a communication hole from the inner surface to the outer surface.

Incidentally, the term "hole" represents the space of the gap of the membrane substrate forming a three-dimensional structure, and it means a portion to be the path of water at the time of water permeation.

The porous membrane layer 11 is, for example, a layer composed of a thermoplastic resin. Examples of the thermoplastic resin may include polyvinylidene fluoride (PVDF), polysulfone, polyacrylonitrile, polyvinylpyrrolidone, and polyethylene glycol, and PVDF or a combination of PVDF and polyvinylpyrrolidone is preferable from the viewpoint of chemical resistance, heat resistance, and the like.

The mass average molecular weight (Mw) of PVDF is preferably from $2.0 \times 10^5$ to $1.2 \times 10^6$. The formativeness is favorable when the mass average molecular weight is within the above range, and thus it is easier to obtain the desired hollow porous membrane 1. In addition, it is easy to control the slope a of the regression line to be described later since the formativeness is favorable. The mass average molecular weight (Mw) of PVDF is more preferably $5.0 \times 10^5$ or more and $1.1 \times 10^6$ or less from the viewpoint of further enhancing the formativeness.

The mass average molecular weight (Mw) of PVDF can be determined by gel permeation chromatography (GPC).

In addition, PVDFs which have different mass average molecular weights (Mw) may be mixed together. For example, in a case in which a thermoplastic resin having a mass average molecular weight of $(M_w)_1$ and a thermoplastic resin having a mass average molecular weight of $(M_w)_2$ are mixed at a mass ratio of $w_1 : w_2$ (provided that, $w_1 + w_2 = 1$) and this is used as the thermoplastic resin, the mass average molecular weight (Mw) as a mixture is determined by the following Equation (1) described in the "Japan Society of Rheology Journal, Vol. 28 (2000), No. 3 p. 99-103".
[Mathematical Formula 5]

$$Mw = w_1 (Mw)_1 + w_2 (Mw)_2 \quad \cdots \cdots (1)$$

The hollow porous membrane of the invention has a significantly high quality so as to be able to maintain the fractionation performance over a long period of time. The quality of the hollow porous membrane is also affected by the properties of PVDF, and thus the ratio (Mw/Mn) of the mass average molecular weight (Mw) to the number average molecular weight (Mn) of PVDF used in the manufacture of the hollow porous membrane is preferably 4.0 or less and more preferably 3.5 or less in order to have a high quality. Although the substantial lower limit is 1, the unity of the molecule is enhanced as the ratio approaches 1, and thus it is possible to more uniformly control the structure. For this reason, the lower limit is not particularly limited. PVDF having Mw/Mn of greater than 4.0 is often generally used in paints and the like, but it is difficult to achieve high fractionation performance as the variance in pore size is great in the case of forming the hollow porous membrane using this. The molecular weight is uniform when Mw/Mn is 4.0 or less, and thus it is possible to form a uniform structure at the time of forming pores and to realize high quality and high fractionation performance.

The number average molecular weight (Mn) of PVDF can be determined by gel permeation chromatography (GPC).

As PVDF used in the manufacture of the hollow porous membrane, it is preferable to use a N,N-dimethylacetamide solution (hereinafter, referred to as the "N,N-dimethylacetamide solution containing polyvinylidene fluoride at 5% by mass in some cases) which contains particles having a particle size of 0.022 $\mu$m or more and 2000 $\mu$m or less by $1.2 \times 10^{16}$ particles/cm$^3$ or less under the condition containing polyvinylidene fluoride at 5% by mass (in the N,N-dimethylacetamide solution containing polyvinylidene fluoride at 5% by mass); and it is more preferable to use a N,N-dimethylacetamide solution which contains polyvinylidene fluoride at 5% by mass and particles having a particle size of 0.022 $\mu$m or more and 2000 $\mu$m or less by $1.0 \times 10^{16}$ particles/cm$^3$ or less.

Incidentally, the lower limit of the number of particles is 0 particle/cm$^3$, and it is possible to form a structure without any defect point as the number of particles is closer thereto. For this reason, the lower limit of the number of particles is not particularly limited.

It is not preferable that the particles having a particle size of 0.022 $\mu$m or more by $1.2 \times 10^{16}$ particles/cm$^3$ or more since the defect point generated by taking the particle portion as a starting point increases when a hollow porous membrane is formed. It is desirable to use a N,N-dimethylacetamide solution which contains polyvinylidene fluoride at 5% by mass and particles having a particle size of 0.022 $\mu$m or more by $1.2 \times 10^{16}$ particles/cm$^3$ or less as PVDF at least in the outermost layer in the case of forming the hollow porous membrane by a plurality of layers.

Incidentally, the "particle size" can be determined by calculating from the result measured for the polymer solution using a particle counter.

In addition, the "particles having a particle size of 0.022 $\mu$m or more and 2000 $\mu$m or less" refer to, for example, a high molecular weight compound (undissolved component) derived from polyvinylidene fluoride and/or impurities.

The porous membrane layer 11 may be a single layer or may have a multilayer structure consisting of at least two layers. It is possible to more easily control the outer diameter D of the hollow porous membrane 1 as the porous membrane layer 11 consists of at least two layers.

The membrane thickness L of the porous membrane layer 11 is 70 $\mu$m or more, preferably from 80 to 300 $\mu$m, and more preferably from 85 to 200 $\mu$m. It is concerned that the mechanical strength is weakened when the internal pressure is applied when the membrane thickness is less than the above lower limit value and the resistance value increases when water permeates and the energy efficiency decreases when the membrane thickness exceeds the above upper limit value.

With regard to the "membrane thickness", the distance is measured from the outer edge of the hollow porous membrane 1 to the outer edge of the support 10 on the cutting plane when the hollow porous membrane 1 is cut in an arbitrary plane perpendicular to the longitudinal direction, and the maximum value among them is adopted as the "membrane thickness L" of the cutting plane.

In other words, in the cross-section, the maximum value among the shortest distances from the outer edge of the hollow porous membrane 1 to the apex portion of the convex on the outer edge of the support 10 is adopted as the membrane thickness L in a case in which there is unevenness on the outer edge of the support 10.

The membrane thickness L can be determined as the average value of the distances from the outer edge of the hollow porous membrane 1 to the outer edge of the support 10 on the cutting plane measured at arbitrary three or more and 10 or less locations.

<Physical properties of hollow porous membrane>

The water permeability of the hollow porous membrane 1 is preferably 5 m$^3$/m$^2$/hr/MPa or more. It is concerned that that the pressure at the time of working increases too high when the water permeability is less than the above lower limit value. The upper limit of the water permeability is not particularly limited, but it is preferably 150 m$^3$/m$^2$/hr/MPa or less in consideration of a tendency of a trade-off between the water permeability and the fractionation performance.

In other words, the water permeability of the hollow porous membrane 1 is preferably 5 m$^3$/m$^2$/hr/MPa or more and 150 m$^3$/m$^2$/hr/MPa or less.

The hollow porous membrane 1 has a region A (hereinafter, referred to as the region having a membrane thickness of 70 $\mu$m in some cases) and in which the coefficient of determination R$^2$ of the regression line is 0.90 or more and 1 or less and the slope a of the regression line is from 0 to 0.08 in the case of determining the regression line Y = aX + b that is a correlation between the cut depth X ($\mu$m) and the average pore size Y ($\mu$m) on the cutting plane at the depth X $\mu$m.

Incidentally, the "cutting plane at the depth X $\mu$m" is preferably a plane parallel to the longitudinal direction of the hollow porous membrane 1.

The hollow porous membrane 1 that is an embodiment of the invention does not cause blocking of the holes even when abrasion is caused and thus can maintain excellent water permeability as it is equipped with the configuration described above. In addition, the hollow porous membrane does not cause a defect point even when it comes in contact with the inorganic particles such as activated carbon and thus can maintain fractionation performance. Incidentally, the region A (region having a membrane thickness of 70 $\mu$m) may be the region from the outer surface to 70 $\mu$m of the hollow porous membrane 1, or an arbitrary region of the thickness portion (namely, the porous membrane layer 11) of the membrane may be the region having a membrane thickness of 70 $\mu$m, and it is not particularly limited.

Incidentally, the "cut depth X ($\mu$m)" is the average value of the heights from the outer surface in the vicinity of the cut portion to the deepest portion thereof when the outer surface of the hollow porous membrane 1 is cut.

The term "defect point" means the location at which bubbles are generated when the internal pressure is applied to the hollow porous membrane 1 immersed in water by the air. In the invention, the point at which bubbles are generated when an internal pressure of 100 kPa is applied is adopted as the defect point. The defect point is generated as the hollow porous membranes 1 swing while sandwiching activated carbon or the like of an additive or the inorganic particles contained in the raw water to be treated, for example, when the air scrubbing is conducted.

Examples of the method for cutting the hollow porous membrane 1 may include a method (particle collision method) in which a slurry containing inorganic particles dispersed therein is blown to the hollow porous membrane 1.

The inorganic particles to be dispersed are not particularly limited, and alumina particles are preferable from the viewpoint of easy handling and favorable dispersion in water. The alumina particles are used as an abrasive, and thus alumina particles (the so-called polygonal alumina powder) which are not subjected to the spheroidizing are more preferable.

The average particle size of the inorganic particles is, for example, preferably from 0.5 to 3 $\mu$m and more preferably from 1 to 2 $\mu$m. It is concerned that the inorganic particles are buried in the gap portion of the porous structure and the hollow fiber porous membrane 1 cannot be ground to an arbitrary depth when the average particle size is less than the above lower limit value, and it is concerned that the average particle size is too large with respect to the porous structure and the hollow fiber porous membrane 1 cannot be ground to an arbitrary depth when the average particle size exceeds the above upper limit value.

Incidentally, the term "average particle size of the inorganic particles" means the average value of the measured particle sizes and it can be determined using a particle counter or the like.

The "average pore size Y" on the cutting plane obtained by cutting the hollow porous membrane 1 from the outer surface to a depth X μm means the surface pore size index determined by the following procedure.

First, a slurry containing inorganic particles dispersed therein is collided to the hollow porous membrane 1 by blowing it through a nozzle, and the diameter (namely, the maximum value of the aperture size of the hole on the cutting plane) of the opening portion of the hole on the cutting plane when the outer surface of the hollow porous membrane 1 is cut is measured. The pore size is a value read from an image of the surface taken using a scanning electron microscope (SEM), and the surface pore size index is the average value of the read pore sizes. The surface pore size index on the cutting plane when the hollow porous membrane 1 is cut from the outer surface to a depth X ($\mu$m) is defined as the average pore size Y ($\mu$m) on the cutting plane when the hollow porous membrane 1 is cut from the outer surface to a depth X ($\mu$m).

Subsequently, the coefficient of determination $R^2$ of the regression line is determined by the following procedure.

The depth X ($\mu$m) and the average pore size Y ($\mu$m) on the cutting plane at the depth X ($\mu$m) are plotted and a regression line $Y = aX + b$ is calculated using the least squares method. The coefficient of determination (contribution rate) $R^2$ can be determined from the equation thus calculated. Here, the "least squares method" is a method to determine the coefficient which minimizes the sum of squares of the residuals so that the estimated function more approaches the measured value.

The slope a of the primary regression line determined using the least squares method is obtained as follows. When the result obtained by plotting the average pore size Y ($\mu$m) on the cutting plane at the depth X ($\mu$m) is $(X_1, Y_1)$, $(X_2, Y_2)$, ..... $(X_i, Y_i)$ and $(X_n, Y_n)$, the slope a and the intercept b of the regression line $Y = aX + b$ are determined by the following Equations (2') and Equation (3').

[Mathematical Formula 6]

$$b = \frac{\sum_{i=1}^{n} X_i Y_i - n\overline{X}\,\overline{Y}}{\sum_{i=1}^{n} X_i^2 - n\overline{X}^2} \quad \cdots (2')$$

$$a = \overline{Y} - b\overline{X} \quad \cdots (3')$$

$\overline{X}$ and Y represent the sample mean of $X_i$ and $Y_i$, respectively.

The coefficient of determination $R^2$ is determined by the following Equation (4).

[Mathematical Formula 7]

$$R^2 = \frac{\sum_{i=1}^{n} (\hat{Y}_i - \overline{Y})^2}{\sum_{i=1}^{n} (Y_i - \overline{Y})^2} \quad \cdots (4')$$

Here, $\hat{Y}_i = a + bX_i$ is satisfied.

Xi represents the value of i-th sample of the depth X ($\mu$m).

Yi represents the value of i-th sample of the average opening size Y ($\mu$m).

n represents the number of samples, and it is a natural number of 2 or more.

i represents the ordinal number of the samples, and it is a natural number from 1 to n.

Incidentally, it is preferable that the measuring point of the average pore size Y is 1 or more points in each of the region at the depth X ($\mu$m) of from 0 to 30 $\mu$m and the region at the depth X ($\mu$m) of more than 30 $\mu$m and 70 $\mu$m or less and 3 or more points in total. Incidentally, it is more preferable as the measuring point is more from the viewpoint of reliability of the data, and thus the upper limit is not provided, but it is set within the practical range.

The value of the coefficient of determination $R^2$ is 0.90 or more and 1 or less and it is desirably 0.92 or more. When the coefficient of determination $R^2$ is less than the above lower limit value, the reliability of the approximate straight line is low, the correlation between the depth X and the average pore size Y is low, and it is not possible to achieve both of excellent water permeability and excellent fractionation performance over a long period of time.

The slope a of the regression line is greater than 0 and 0.08 or less, and it is preferably from 0.003 to 0.05.

The fact that the slope a is small means that the change in pore size of the porous membrane layer 11 is small in the depth direction (namely, the direction from the outer surface toward the inside of the hollow porous membrane 1) of the hollow porous membrane 1. Usually, the pore size increases from the outer surface toward the inside in the hollow porous membrane 1. However, the fact that a change in pore size is small indicates that the porous membrane layer 11 is plastically deformed by being cut so as to block the holes. Hence, it is not possible to maintain excellent water permeability in a state in which the slope a is less than the above lower limit value.

An increase in average pore size Y is significant from the outer surface toward the inside of the hollow porous membrane 1 when the slope a exceeds the upper limit value, and thus it is not possible to maintain excellent fractionation performance.

The maximum pore size (hereinafter, referred to as the maximum pore size at from 50 to 70 $\mu$m in some cases) on the cutting plane when the hollow porous membrane 1 is cut from the outer surface to a depth of from 50 to 70 $\mu$m is preferably 0.01 $\mu$m or more and less than 10 $\mu$m and more preferably 0.05 $\mu$m or more and 5 $\mu$m or less. It is easy to maintain excellent fractionation performance even when the surface of the hollow porous membrane 1 is damaged when the maximum pore size at from 50 to 70 $\mu$m is less than 10 $\mu$m. The term "maximum pore size at from 50 to 70 $\mu$m" means the maximum value of the pore size of the aperture portion of the hole appearing in the region from the outer surface to the depth of from 50 to 70 $\mu$m of the hollow porous membrane 1 by being cut. The pore size is measured by image analysis of an image taken using a SEM.

The minimum pore size (hereinafter, referred to as the minimum pore size at from 50 to 70 $\mu$m in some cases) on the cutting plane when the hollow porous membrane 1 is cut from the outer surface toward the inside by a depth of from 50 to 70 $\mu$m is preferably 0.01 $\mu$m or more and 10 $\mu$m or less and more preferably 0.5 $\mu$m or more and 5 $\mu$m or less. It is concerned that the water permeability deteriorates when the minimum pore size is less than the above lower limit value.

The maximum pore size (hereinafter, referred to as the maximum pore size at from 50 to 70 $\mu$m in some cases) on the cutting plane when the hollow porous membrane 1 is cut from the outer surface toward the inside by a depth of from 50 to 70 $\mu$m is preferably 0.01 $\mu$m or more and 10 $\mu$m or less and more preferably 0.05 $\mu$m or more and 5 $\mu$m or less.

One aspect of the hollow porous membrane 1 that is an embodiment of the invention is that the average pore size Y in the direction perpendicular to the depth direction of the hole at a depth X ($\mu$m) satisfies a regression line Y = aX + b, a is $0 < a \leq 0.08$, and the hollow porous membrane 1 has a porous membrane layer.

(Method for manufacturing hollow porous membrane)

Examples of the method for manufacturing the hollow porous membrane 1 may include a manufacturing method having the following steps (1) to (4).

Step (1): a step of coating a membrane-forming stock solution on the outer peripheral surface of a support.
Step (2): a step of coagulating the membrane-forming stock solution after the step (1) to form a porous membrane layer and to obtain a hollow porous membrane precursor.
Step (3): a step of washing the hollow porous membrane precursor.
Step (4): a step of drying the hollow porous membrane precursor to obtain a hollow porous membrane.

In other words, one aspect of the method for manufacturing the hollow porous membrane 1 is a manufacturing method including a step (step (1)) of coating a membrane-forming stock solution on the outer peripheral surface of a support, a step (step (2)) of coagulating the membrane-forming stock solution after the step (1) to form a porous membrane layer and to obtain a hollow porous membrane precursor, a step (step (3)) of washing the hollow porous membrane precursor, and a step (step (4)) of drying the hollow porous membrane precursor to obtain a hollow porous membrane.

Incidentally, the term "outer peripheral surface of the support" means the outer surface that is constituted by the outer periphery of the cross-section perpendicular to the longitudinal direction of the support, and usually it excludes the top surface and the bottom surface.

Hereinafter, an example of the method for manufacturing the hollow porous membrane 1 will be described with reference to Fig. 3.

An apparatus (precursor manufacturing apparatus) 40 for manufacturing the hollow porous membrane precursor illustrated in Fig. 3 is equipped with a double tube spinning nozzle 42 for continuously coating a membrane-forming stock solution on the support 10 that is continuously supplied from the unwinding device (not illustrated), a stock solution supply device 44 for supplying the membrane-forming stock solution to the double tube spinning nozzle 42, a coagulation bath 46 containing a coagulating liquid to coagulate the membrane-forming stock solution coated on the support 10, and a guide roll 48 for continuously introducing the support 10 coated with the membrane-forming stock solution to the coagulation bath 46.

A pipe line through which the support 10 passes is formed on the double tube spinning nozzle 42. The double tube spinning nozzle 42 has a structure in which a slit-like membrane-forming stock solution ejecting port is formed in the middle of the pipe line in the circumferential direction of the pipe line to eject the membrane-forming stock solution. The membrane-forming stock solution is supplied in a constant amount from the stock solution supply device 44 when the support 10 passes through the pipe line, and the membrane-forming stock solution is coated on the outer peripheral surface of the support 10 in an arbitrary thickness (step (1)).

The internal diameter of the pipe line of the double tube spinning nozzle 42 is slightly larger than the outer diameter of the support 10, and the inner peripheral surface of the pipe line of the double tube spinning nozzle 42 and the support 10 has a constant gap. The gap is appropriately changed by the membrane thickness L of the porous membrane layer 11, the viscosity of the membrane-forming stock solution, and the outer diameter or running speed of the support 10.

The membrane-forming stock solution contains a thermoplastic resin constituting the porous membrane layer 11 and a solvent. Examples of the solvent may include a water-soluble solvent such as N,N-dimethylformamide, N,N-dimethylacetamide, dimethyl sulfoxide, or N-methyl-2-pyrrolidone, and N,N-dimethylacetamide and N-methyl-2-pyrrolidone are preferable since they can form the porous membrane layer 11 exhibiting high water permeability.

The membrane-forming stock solution may contain a hydrophilic polymer such as polyvinylpyrrolidone as a micropore-forming auxiliary.

The concentration of the thermoplastic resin in the membrane-forming stock solution is preferably from 5 to 50% by mass and more preferably from 10 to 40% by mass with respect to the total mass of the membrane-forming stock solution. It is possible to form a porous structure having holes in favorable connection with one another when the concentration of the thermoplastic resin in the membrane-forming stock solution is within the above range.

As the thermoplastic resin, for example there are various ones such as polyvinylidene fluoride, polysulfone, polyacrylonitrile, and polyimide, and polyvinylidene fluoride is preferable among them from the viewpoint of heat resistance or excellent resistance to the chemical for washing the hollow porous membrane, such as a hypochlorite salt.

The turbidity of the membrane-forming stock solution is preferably 30 NTU or less and more preferably 25 NTU or less. The turbidity of the membrane-forming stock solution can be adopted as an indicator of the amount of foreign matter contained therein, and it is possible to form a favorable structure exhibiting high fractionation performance when the turbidity is 30 degrees or less but it is not preferable that the turbidity is higher than 30 degrees since the defect point is generated by the incorporation of foreign matter and the fractionation performance deteriorates in association with it.

In addition, it is possible to control the surface pore size index or the slope a of the regression line by changing the composition of the membrane-forming stock solution or the mass average molecular weight of the thermoplastic resin. For example, the surface pore size index or the slope a of the regression line tends to decrease as the concentration or mass average molecular weight of the thermoplastic resin is higher. However, the porous membrane structure is determined in the balance with the conditions in other steps. For this reason, it is possible to control the surface pore size index or the slope a of the regression line, for example, by the combination of the composition of the membrane-forming stock solution or the mass average molecular weight of the thermoplastic resin with the concentration of the solvent in the coagulating liquid to be described later or the temperature of the coagulating liquid.

The support 10 coated with the membrane-forming stock solution is introduced into the coagulating liquid in the coagulation bath 46 using a guide roll 48. The membrane-forming stock solution coated on the outer peripheral surface of the support 10 is coagulated when the support 10 is introduced into the coagulating liquid to form a porous membrane layer 11, whereby a hollow porous membrane precursor 18 is obtained (step (2)).

Incidentally, the porous membrane layer 11 may be formed into a multilayer structure by repeating the steps (1) and (2) between the step (2) and the step (3).

As the coagulating liquid, an aqueous solution containing the same solvent as the solvent for the membrane-forming stock solution is preferable. For example, in a case in which the solvent of the membrane-forming stock solution is N,N-dimethylacetamide or N-methyl-2-pyrrolidone, the concentration of solvent in the coagulating liquid is preferably from 1 to 50% by mass and more preferably from 5 to 45% by mass with respect to the total mass of the coagulating liquid. A suitable porous membrane structure, namely, a structure in which the connection between the holes are favorable, the water permeability is higher, and the fractionation performance is more favorable is likely to be formed when the concentration of the solvent in the coagulating liquid is within the above range.

In addition, the temperature of the coagulating liquid is preferably from 10 to 90°C and more preferably from 15 to 85°C. It is possible to form a suitable porous membrane structure, namely, a structure in which the connection between the holes are favorable, the water permeability is higher, and the fractionation performance is more favorable when the temperature of the coagulating liquid is within the above range.

In addition, it is possible to control the surface pore size index or the slope a of the regression line by changing the concentration of the solvent in the coagulating liquid or the temperature of the coagulating liquid. For example, the surface pore size index and the slope a of the regression line tend to be smaller as the concentration of the solvent in the coagulating liquid is lower and the temperature of the coagulating liquid is lower. However, the porous membrane structure is determined in the balance with the conditions in other steps. For this reason, it is possible to control the surface pore size index or the slope a of the regression line, for example, by the combination of the concentration of the solvent in the coagulating liquid or the temperature of the coagulating liquid with the composition of the membrane-forming stock solution or the mass average molecular weight of the thermoplastic resin.

The hollow porous membrane precursor 18 thus obtained is, for example, washed with water or hot water so as to remove the solvent. Subsequently, it is washed with a chemical liquid such as hypochlorous acid and then washed with water or hot water so as to remove the chemical liquid (step (3)). Here, the "hot water" is water at 60°C or higher and 100°C or lower at normal pressure.

The hollow porous membrane precursor 18 after the step (3) is dried to obtain the hollow porous membrane 1 (step (4)). The hollow porous membrane 1 thus obtained may be wound around the bobbin, a skein, and the like.

The drying temperature in the step (4) is preferably 60°C or higher and lower than 130°C. The drying efficiency is favorable and the thermoplastic change due to contact with the roller or the like hardly occurs during the drying step when the drying temperature is within the above range.

The drying time in the step (4) is preferably 1 minute or longer and shorter than 1 hour. The production efficiency is enhanced when the drying time is within the above range.

As described above, the hollow porous membrane that is an embodiment of the invention can exhibit both of excellent water permeability and excellent fractionation performance over a long period of time since the cut depth X and the average pore size Y at the depth X are in a specific correlation in the region from the outer surface to a depth of 70 $\mu$m of the hollow porous membrane and thus blocking of the holes is not caused even when abrasion is caused and the defect point due to contact with the activated carbon or the like is hardly generated.

The hollow porous membrane that is an embodiment of the invention is suitable as a filtration membrane used in the water treatment by precise filtration such as sewage and waste water treatment or purified water treatment, ultrafiltration, or the like. In addition, the hollow porous membrane is also suitable for an application in which activated carbon is concurrently used since it is resistant to the frictional wear due to contact with an inorganic substance or the like.

(Other embodiments)

In the above embodiment, a support is equipped, but the invention is not limited thereto, and a support may not be equipped. Provided that, a hollow porous membrane equipped with a support is preferable from the viewpoint of increasing the mechanical strength of the hollow porous membrane and enhancing the durability thereof.

In the above embodiment, the so-called non-solvent induced phase separation method is described as an example of the method for forming the porous membrane layer, but the method for forming the porous membrane layer may be, for example, a known thermally induced phase separation method.

Examples

Hereinafter, the invention will be described with reference with Examples, but the invention is not limited to Examples.

(Measuring method)

<Hollow porous membrane, outer diameter of support, and membrane thickness of porous membrane layer>

The hollow porous membrane, the outer diameter of the support, and the membrane thickness of the porous membrane layer can be measured, for example, by the following method.

The hollow porous membrane for each example was cut in a length of about 10 cm to use as a sample. Three pieces of samples were bundled, and the entire bundled sample was then coated with a polyurethane resin. The polyurethane resin was allowed to enter the hollow portion of the support as well. The polyurethane resin was cured, and a flake having a thickness (corresponding to the length in the longitudinal direction of the hollow porous membrane) of about 0.5 mm was then cut out of the resultant using a razor blade. The optical image of the cross-section of the cut flake was projected on the screen at a magnification of 100-fold (objective lens) using a projector (PROFILE PROJECTOR V-12 manufactured by Nikon Corporation), and the outer diameter D of the hollow porous membrane of the sample and the membrane thickness L of the porous membrane layer were read from the projected image. This operation was conducted three times, and the average values of the numerical values thus measured were adopted as the outer diameter D of the hollow porous membrane and the membrane thickness L of the porous membrane layer, respectively. In addition, the outer diameter R of the support was determined by R = D - 2L.

<Average pore size Y>

The average pore size Y of the hollow porous membrane for each example was determined by cutting the hollow porous membrane using a particle collision method.

For the particle collision method, the MSE-A manufactured by Parumeso Co., Ltd. was used. A polygonal alumina powder having an average particle size of 1.2 $\mu$m was dispersed in water to prepare a slurry containing polygonal alumina at 3% by mass with respect to the total mass of the slurry. The hollow porous membrane was fixed to a die, and the distance between the hollow porous membrane and the nozzle was set to 4 mm. A jet of the slurry was emitted from the nozzle to cut the surface of the hollow porous membrane. The jet intensity at this time was set such that the scraping displacement (namely, the depth to be cut when 1 g of the slurry is blown) with respect to the amount of the slurry jetted became 0.0636 $\mu$m/g when the existing Si wafer was cut under the same experimental conditions in advance. The cut portion was washed with water, and the cut depth X was then measured. The depth X is a value measured using the stylus-type surface shape measuring instrument manufactured by Kosaka Laboratory Ltd. and a stylus with a diamond needle of $R^2$ $\mu$m.

The surface pore size index (average pore size Y) at the depth X was determined by the following procedure. The IMAGE-PRO PLUS version5.0 developed by Media Cybernetics, Inc. was used for image analysis.

The area of about 500 $\mu$m2 around the center of the surface appearing when the hollow porous membrane was cut by the depth X was taken as an image at 5000-fold using a SEM, and the diameter and area of the opening were analyzed for all the openings on this image taken using a SEM. Subsequently, the openings were integrated in the order of size of the opening area by putting the larger one first, the openings to be 50% of the sum of the areas of all the openings were picked out, and the average value of the diameters of these pores was adopted as the average pore size Y.

<Water permeability>

The hollow porous membrane for each example was cut in a length of 4 cm, and the aperture portion of one end surface was sealed with a polyurethane resin to use as a sample. Next, the sample was immersed in ethanol for 5 minutes and then in pure water to replace ethanol with pure water.

Pure water (25°C) was put in a container, the other end surface (end surface that is open) of the sample was linked to the container via a tube, an air pressure of 100 kPa was applied to the container to discharge the pure water through the openings of the sample, and the amount of pure water discharged for 1 minute was measured. This was measured three times, and the average value thereof was determined. The value obtained by dividing this numerical value by the surface area of the sample and then converting it to a pressure of 1 MPa was adopted as the water permeability of the hollow porous membrane.

<Air scrubbing test>

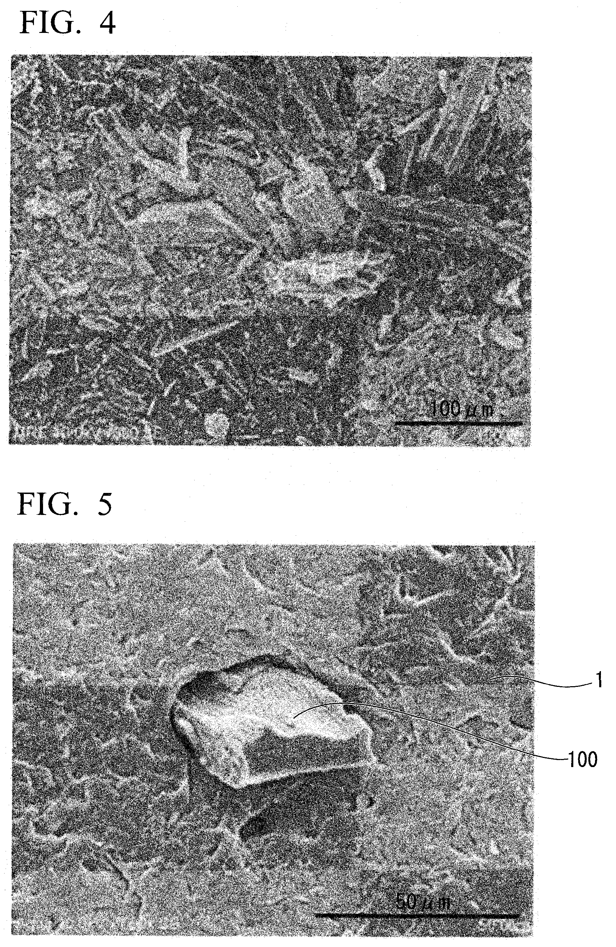

The hollow porous membrane was cut in a length of 35 cm, this was bundled, and both end portions thereof were sealed with a polyurethane resin to use as a sample. The number of the hollow porous membranes to be bundled was set to the number so as to have a surface area of 150 cm2. Next, a container having a volume enough to accommodate the sample was filled with pure water, and activated carbon from wood (average particle size: 23 $\mu$m) illustrated in Fig. 4 was dispersed in water so as to be 3000 ppm by mass with respect to the total mass of the pure water filled in the container, thereby preparing an activated carbon dispersion. The average particle size of the activated carbon can be determined using a particle counter or the like. The sample was immersed in ethanol for 5 minutes and then in pure water to replace ethanol with pure water. Subsequently, the sample was immersed in the activated carbon dispersion by allowing one end portion of the hollow porous membrane to face downward. Air scrubbing was conducted by continuously supplying air of 100 Nm3/m2/hr from the bottom portion of the container for 30 days. The "Nm3" is the volume (m3) in the standard state.

Incidentally, The reason for using activated carbon from wood in the air scrubbing test of the present paper is as follows.

Activated carbon from wood is likely to pierce the membrane surface due to its sharp shape. It is because the same wear resistance is obtained even in the case of inorganic particles or activated carbon other than this if a defect point is not generated by being pierced with activated carbon from wood.

One end surface of the sample was cut to open, and a tube was linked to this aperture portion. The sample was immersed in pure water (25°C) in a container, and an internal pressure of 100 kPa was applied to the sample by introducing air through the tube to confirm the presence or absence of a defect point on the sample. It was judged that a defect point was "absent" when bubbles were not generated in pure water in the container, and it was judged that a defect point is "present" when bubbles were generated. Fig. 5 is an image taken using an electron microscope illustrating an example of a defect point that can be generated in the present test, and it illustrates a state in which the surface of the hollow porous membrane 1 is pierced with the activated carbon 100.

<Turbidity of membrane-forming stock solution>

After preparation of the membrane-forming stock solution for each example, the turbidity (NTU) of the membrane-forming stock solution was measured at room temperature using the 2100AN turbidimeter manufactured by HachUltra Co., Ltd.

<number of particles in N,N-dimethylacetamide solution>

Polyvinylidene fluoride and N,N-dimethylacetamide were mixed together by stirring at 60°C at 5% by mass and 95% by mass with respect to the total mass of the solution, respectively, thereby preparing a N,N-dimethylacetamide solution containing polyvinylidene fluoride at 5% by mass. The specific surface area ($cm^2/cm^3$) and the surface area distribution with respect to the particle size of this solution were measured at 25°C using the particle counter (Model LA-920) manufactured by Horiba, Ltd., and the surface area of the particles was converted to the number of particles per 1 $cm^3$ of the N,N-dimethylacetamide solution containing polyvinylidene fluoride at 5% by mass. The number of particles having a particle size of 0.022 $\mu$m or more was judged as "0" in a case in which the particles were not detected.

(Example 1)

A hollow porous membrane was manufactured in which two layers of porous membrane layer composed of a thermoplastic resin were formed on the outer peripheral surface of a support obtained by circular knitting a multifilament into a cylindrical shape and subjecting it to a heat treatment in the following manner.

First, a multifilament of a polyester fiber (made of PET, fineness: 417 dtex) was circular knitted into a cylindrical shape using the support manufacturing apparatus illustrated in Fig. 2 and subjected to a heat treatment at 210°C, thereby obtaining a support. The outer diameter of the support thus obtained was 2.43 mm.

Polyvinylidene fluoride (mass average molecular weight (hereinafter, abbreviated as Mw): $6.8 \times 10^5$, Mw/Mn: 3.2, Kynar761A manufactured by ARKEMA) at 18.8% by mass with respect to the total mass of the membrane-forming stock solution to be obtained, polyvinylpyrrolidone (Mw: $9.0 \times 10^4$, PVP-K79N manufactured by NIPPON SHOKUBAI CO., LTD.) at 12.2% by mass with respect to the total mass of the membrane-forming stock solution to be obtained, and N,N-dimethylacetamide of a solvent at 69.0% by mass with respect to the total mass of the membrane-forming stock solution to be obtained were mixed together at 60°C by stirring, and this was used as the first membrane-forming stock solution and the second membrane-forming stock solution. The turbidity of this membrane-forming stock solution was 3.7 NTU. In addition, the number of particles having a particle size of 0.022 $\mu$m or more in the N,N-dimethylacetamide solution containing polyvinylidene fluoride at 5% by mass used at this time was 0 particle/$cm^3$.

A hollow porous membrane precursor was manufactured by using the same apparatus as the precursor manufacturing apparatus 40 illustrated in Fig. 3.

The outer peripheral surface of the support was coated with the first and second membrane-forming stock solutions by allowing the support to pass through the middle pipe line of a triple tube spinning nozzle and also sending the first membrane-forming stock solution through the pipe line at the outside thereof and further the second membrane-forming stock solution through the outermost layer. The support coated with the membrane-forming stock solution was introduced into the coagulating liquid at 75°C to coagulate the first and second membrane-forming stock solutions, thereby obtaining a hollow porous membrane precursor having a porous membrane layer with a two-layer structure consisting of the first layer formed as the first membrane-forming stock solution was coagulated and the second layer formed as the second membrane-forming stock solution was coagulated. As the coagulating liquid, a N,N-dimethylacetamide solution at 40% by mass was used.

A series of steps of immersing the hollow porous membrane precursor in an aqueous solution of sodium hypochlorite having a concentration of 5% by mass at room temperature (25°C), then retaining in a water vapor atmosphere at 100°C, and immersing in warm water at 90°C was repeated 3 times so as to wash and remove polyvinylpyrrolidone remaining in the membrane.

The hollow porous membrane precursor thus washed was dried for 10 minutes in a drying furnace heated at 110°C to evaporate the moisture, thereby obtaining a hollow porous membrane.

The hollow porous membrane of the present example had an outer diameter of 2.74 mm and a membrane thickness of the porous membrane layer of 153 $\mu$m. The average pore sizes Y on the cutting planes appearing when the hollow porous membrane was cut from the surface to depths of 9.8 $\mu$m, 20.9 $\mu$m, 42.4 $\mu$m, and 57.5 $\mu$m by the particle collision method were 0.539 $\mu$m, 0.730 $\mu$m, 0.885 $\mu$m, and 1.110 $\mu$m, respectively, the coefficient of determination $R^2$ of the regression line obtained by plotting these was 0.98, and the slope a of the regression line was 0.011. In addition, the maximum pore size on the cutting plane when cut to a depth of 57.5 $\mu$m was 4.2 $\mu$m.

The water permeability of the hollow porous membrane of the present example was 27.5 $m^3/m^2/hr/MPa$. The defect point was not generated when the air scrubbing test was conducted by using the hollow porous membrane of the present example.

(Example 2)

The membrane-forming stock solution manufactured in the same manner as in Example 1 was used as the first and second membrane-forming stock solutions. A support manufactured in the same manner as in Example 1 except that a polyester fiber (made of PET, fineness: 167 dtex) was used and the heat treatment conducted at 190°C was used as the support. The outer diameter of the support used was 1.42 mm.

A hollow porous membrane precursor was manufactured by using the same apparatus as the precursor manufacturing apparatus 40 illustrated in Fig. 3.

The outer peripheral surface of the support coated with the first and second membrane-forming stock solutions by allowing the support to pass through the middle pipe line of the triple tube spinning nozzle and also sending the first membrane-forming stock solution through the pipe line at the outside thereof and further the second membrane-forming stock solution through the outermost layer. The support coated with the membrane-forming stock solution was introduced into the coagulating liquid at 79°C to coagulate the first and second membrane-forming stock solutions, thereby obtaining a hollow porous membrane precursor having a porous membrane layer with a two-layer structure of the first layer formed as the first membrane-forming stock solution was coagulated and the second layer formed as the second membrane-forming stock solution was coagulated. As the coagulating liquid, a N,N-dimethylacetamide solution at 40% by mass was used.

A series of steps of immersing the hollow porous membrane precursor in an aqueous solution of sodium hypochlorite having a concentration of 5% by mass at room temperature (25°C), then retaining in a water vapor atmosphere at 100°C, and immersing in warm water at 90°C was repeated 3 times so as to wash and remove polyvinylpyrrolidone remaining in the membrane.

The hollow porous membrane precursor thus washed was dried for 3 minutes in a drying furnace heated at 115°C to evaporate the moisture, thereby obtaining a hollow porous membrane.

The hollow porous membrane of the present example had an outer diameter of 1.73 mm and a membrane thickness of the porous membrane layer of 155 $\mu$m. The average pore sizes Y on the cutting planes appearing when the hollow porous membrane was cut from the surface to depths of 4.8 $\mu$m, 8.3 $\mu$m, 22.9 $\mu$m, 48.5 $\mu$m, and 52.5 $\mu$m by the particle collision method were 0.143 $\mu$m, 0.124 $\mu$m, 0.834 $\mu$m, 1.136 $\mu$m, and 1.730 $\mu$m, respectively, the coefficient of determination $R^2$ of the regression line obtained by plotting these was 0.92, and the slope a of the regression line was 0.030. In addition, the maximum pore size on the surface when cut to a depth of 52.5 $\mu$m was 3.2 $\mu$m.

The water permeability of the hollow porous membrane of the present example was 26.2 $m^3/m^2/hr/MPa$. The defect point was not generated when the air scrubbing test was conducted by using the hollow porous membrane of the present example.

(Example 3)

The membrane-forming stock solution and the support manufactured in the same manner as in Example 2 were used as first and second membrane-forming stock solutions and the support, respectively. The outer diameter of the support used was 1.44 mm.

A hollow porous membrane precursor was manufactured by using the same apparatus as the precursor manufacturing apparatus 40 illustrated in Fig. 3.

The outer peripheral surface of the support coated with the first and second membrane-forming stock solutions by allowing the support to pass through the middle pipe line of the triple tube spinning nozzle and also sending the first membrane-forming stock solution through the pipe line at the outside thereof and further the second membrane-forming stock solution through the outermost layer. The support coated with the membrane-forming stock solution was introduced into the coagulating liquid at 77°C to coagulate the first and second membrane-forming stock solutions, thereby obtaining a hollow porous membrane precursor having a porous membrane layer with a two-layer structure of the first layer formed as the first membrane-forming stock solution was coagulated and the second layer formed as the second membrane-forming stock solution was coagulated. As the coagulating liquid, a N,N-dimethylacetamide solution at 40% by mass was used.

A series of steps of immersing the hollow porous membrane precursor in an aqueous solution of sodium hypochlorite having a concentration of 5% by mass at room temperature (25°C), then retaining in a water vapor atmosphere at 100°C, and immersing in warm water at 90°C was repeated 3 times so as to wash and remove polyvinylpyrrolidone remaining in the membrane.

The hollow porous membrane precursor thus washed was dried for 3 minutes in a drying furnace heated at 115°C to evaporate the moisture, thereby obtaining a hollow porous membrane.

The hollow porous membrane of the present example had an outer diameter of 1.66 mm and a membrane thickness of the porous membrane layer of 112 $\mu$m. The average pore sizes Y on the cutting planes appearing when the hollow porous membrane was cut from the surface to depths of 5.8 $\mu$m, 12.2 $\mu$m, 25.6 $\mu$m, and 68.0 $\mu$m by the particle collision method were 0.915 $\mu$m, 0.986 $\mu$m, 1.015 $\mu$m, and 1.651 $\mu$m, respectively, the coefficient of determination $R^2$ of the regression line obtained by plotting these was 0.96, and the slope a of the regression line was 0.012. In addition, the maximum pore size on the surface when cut to a depth of 68.0 $\mu$m was 2.2 $\mu$m.

The water permeability of the hollow porous membrane of the present example was 18.9 $m^3/m^2/hr/MPa$. The defect point was not generated when the air scrubbing test was conducted by using the hollow porous membrane of the present example.

(Example 4)

The membrane-forming stock solution and the support manufactured in the same manner as in Example 1 were used as first and second membrane-forming stock solutions and the support, respectively. The outer diameter of the support used was 2.46 mm.

A hollow porous membrane precursor was manufactured by using the same apparatus as the precursor manufacturing apparatus 40 illustrated in Fig. 3.

The outer peripheral surface of the support coated with the first and second membrane-forming stock solutions by allowing the support to pass through the middle pipe line of the triple tube spinning nozzle and also sending the first membrane-forming stock solution through the pipe line at the outside thereof and further the second membrane-forming stock solution through the outermost layer. The support coated with the membrane-forming stock solution was introduced into the coagulating liquid at 77°C to coagulate the first and second membrane-forming stock solutions, thereby obtaining a hollow porous membrane precursor having a porous membrane layer with a two-layer structure of the first layer formed as the first membrane-forming stock solution was coagulated and the second layer formed as the second membrane-forming stock solution was coagulated. As the coagulating liquid, a N,N-dimethylacetamide solution at 40% by mass was used.

A series of steps of immersing the hollow porous membrane precursor in an aqueous solution of sodium hypochlorite having a concentration of 5% by mass at room temperature (25°C), then retaining in a water vapor atmosphere at 100°C, and immersing in warm water at 90°C was repeated 3 times so as to wash and remove polyvinylpyrrolidone remaining in the membrane.

The hollow porous membrane precursor thus washed was dried for 6 minutes in a drying furnace heated at 130°C to evaporate the moisture, thereby obtaining a hollow porous membrane.

The hollow porous membrane of the present example had an outer diameter of 2.66 mm and a membrane thickness of the porous membrane layer of 102 $\mu$m. The average pore sizes Y on the cutting planes appearing when the hollow porous membrane was cut from the surface to depths of 5.4 $\mu$m, 7.3 $\mu$m, 37.2 $\mu$m, and 51.5 $\mu$m by the particle collision method were 0.049 $\mu$m, 0.038 $\mu$m, 1.472 $\mu$m, and 2.000 $\mu$m, respectively, the coefficient of determination $R^2$ of the regression line obtained by plotting these was 0.99, and the slope a of the regression line was 0.044. In addition, the maximum pore size on the cutting plane when cut to a depth of 51.5 $\mu$m was 2.3 $\mu$m.

The water permeability of the hollow porous membrane of the present example was 27.1 $m^3/m^2/hr/MPa$. The defect point was not generated when the air scrubbing test was conducted by using the hollow porous membrane of the present example.

(Comparative Example 1)

The support was obtained in the same manner as in Example 1. The outer diameter of the support thus obtained was 2.43 mm. The hollow porous membrane was manufactured in the same manner as in Example 1 except the first and second membrane-forming stock solutions.

The first membrane-forming stock solution was obtained by stirring and mixing polyvinylidene fluoride (Mw: 5.2 $\times$ $10^5$, Kynar301F manufactured by ARKEMA) at 11.8% by mass with respect to the total mass of the membrane-forming stock solution to be obtained, polyvinylidene fluoride (Mw: 2.2 $\times$ $10^5$, Kynar9000LD manufactured by ARKEMA) at 11.8% by mass with respect to the total mass of the membrane-forming stock solution to be obtained, polyvinylpyrrolidone (Mw: $9.0 \times 10^4$, PVP-K79N manufactured by NIPPON SHOKUBAI CO., LTD.) at 11.8% by mass with respect to the total mass of the membrane-forming stock solution to be obtained, and N,N-dimethylacetamide of a solvent at 64.6% by mass with respect to the total mass of the membrane-forming stock solution to be obtained at 60°C. Mw/Mn of two kinds of polyvinylidene fluoride used at this time was 4.7 in a mixed state, and the turbidity of the membrane-forming stock solution was 33.6 NTU.

The second membrane-forming stock solution was obtained by stirring and mixing polyvinylidene fluoride (Mw: $5.2 \times 10^5$, Mw/Mn: 4.2, Kynar301F manufactured by ARKEMA) at 19.2% by mass with respect to the total mass of the membrane-forming stock solution to be obtained, polyvinylpyrrolidone (Mw: $9.0 \times 10^4$, PVP-K79N manufactured by NIPPON SHOKUBAI CO., LTD.) at 10.1% by mass with respect to the total mass of the membrane-forming stock solution to be obtained, and N,N-dimethylacetamide of a solvent at 70.7% by mass with respect to the total mass of the membrane-forming stock solution to be obtained at 60°C. The turbidity of this membrane-forming stock solution was 60.8 NTU. In addition, the number of particles having a particle size of 0.022 $\mu$m or more in the N,N-dimethylacetamide solution containing polyvinylidene fluoride at 5% by mass used at this time was $1.29 \times 10^{16}$ particles/cm$^3$.

The hollow porous membrane was obtained in the same manner as in Example 1 except the first membrane-forming stock solution and the second membrane-forming stock solution thus obtained were used.

The hollow porous membrane of the present example had an outer diameter of 2.73 mm and a membrane thickness of the porous membrane layer of 147 $\mu$m. The average pore sizes Y on the cutting planes appearing when the hollow porous membrane was cut from the surface to depths of 3.9 $\mu$m, 6.6 $\mu$m, 19 $\mu$m, and 53.4 $\mu$m by the particle collision method were 0.025 $\mu$m, 0.27 $\mu$m, 0.024 $\mu$m, and 4.199 $\mu$m, respectively, the coefficient of determination R$^2$ of the regression line obtained by plotting these was 0.92, and the slope a of the regression line was 0.088. In addition, the maximum pore size on the surface when cut to a depth of 53.4 $\mu$m was 21.9 $\mu$m.

The water permeability of the hollow porous membrane of the present example was 40.0 m$^3$/m$^2$/hr/MPa. The defect point was generated when the air scrubbing test was conducted by using the hollow porous membrane of the present example.

[Table 1]

| | Support | | Membrane-forming stock solution | | | | | | |
|---|---|---|---|---|---|---|---|---|---|
| | Fineness | Outer diameter | First porous membrane layer | | | Second porous membrane layer | | | |
| | dtex | mm | PVDF Mw | Mw/Mn | Turbidity of dope (NTU) | PVDF Mw | Mw/Mn | Turbidity of dope (NTU) | Number of particles of 0.022 $\mu$m or more in 5 wt% DMAc (particles/cm$^3$) |
| Example 1 | 417 | 2.43 | 6.8*105 | 3.2 | 3.7 | 6.8*105 | 3.2 | 3.7 | 0 |
| Example 2 | 167 | 1.42 | 6.8*105 | 3.2 | 3.7 | 6.8*105 | 3.2 | 3.7 | 0 |
| Example 3 | 167 | 1.44 | 6.8*105 | 3.2 | 3.7 | 6.8*105 | 3.2 | 3.7 | 0 |
| Example 4 | 417 | 2.46 | 6.8*105 | 3.2 | 3.7 | 6.8*105 | 3.2 | 3.7 | 0 |
| Comparative Example 1 | 417 | 2.50 | 3.7*105 | 4.7 | 33.6 | 5.2*105 | 4.2 | 60.8 | 129*10$^{10}$ |

[Table 2]

| | Hollow porous membrane | | | | | Maximum pore size on surface at depth of from 50 to 70 μm | Result of air scrubbing test (presence or absence of defect point) |
|---|---|---|---|---|---|---|---|
| | Outer diameter | Membrane thickness | Water permeability | Regression line | | | |
| | | | | Coefficient of determination | Slope | | |
| | mm | μm | m/hr/Mpa | - | - | μm | - |
| Example 1 | 2.74 | 153 | 27.5 | 0.98 | 0.011 | 4.2 | Absence |
| Example 2 | 1.73 | 155 | 26.2 | 0.92 | 0.03 | 3.2 | Absence |
| Example 3 | 1.66 | 112 | 18.9 | 0.96 | 0.012 | 2.2 | Absence |
| Example 4 | 2.66 | 102 | 27.1 | 0.99 | 0.044 | 2.3 | Absence |
| Comparative Example 1 | 2.80 | 150 | 40.0 | 0.92 | 0.088 | 21.9 | Presence |

As presented in Table 2, Examples 1 to 4 having a region A (region having a membrane thickness of 70 μm) in which the coefficient of determination $R^2$ is 0.90 or more and a slope a of the regression line is $0 < a \leq 0.08$ were able to maintain excellent water permeability and to obtain a hollow porous membrane without any defect point.

On the other hand, it has been indicated as a result of the air scrubbing test that there is a defect point in the hollow porous membrane obtained in Comparative Example 1 which does not have a region A (region having a membrane thickness of 70 μm) in which the coefficient of determination $R^2$ is 0.90 or more and a slope a of the regression line is $0 < a \leq 0.08$.

From these results, it has been demonstrated that excellent water permeability can be maintained and the deterioration in fractionation performance due to a defect point is not caused by applying the invention.

INDUSTRIAL APPLICABILITY

According to the hollow porous membrane of the invention, both of excellent water permeability and excellent fractionation performance are achieved over a long period of time, and thus it is industrially significantly important.

EXPLANATIONS OF LETTERS OR NUMERALS

1    Hollow porous membrane
10    Support
11    Porous membrane layer

Claims

1. A hollow porous membrane comprising a porous membrane layer having a hole on an outer surface, wherein a membrane thickness of the porous membrane layer is 70 μm or more, and the porous membrane layer has a region A, the correlation between a depth X (μm) and an average pore size Y (μm) of holes on a cutting plane at the depth X (μm) satisfies a regression line Y = aX + b in the case of cutting an outer surface of the porous membrane layer by the depth X (μm) in the region A, a slope a of the regression line is $0 < a \leq 0.08$ and a coefficient of determination $R^2$ of the regression line is 0.90 or more, and a, b, and $R^2$ are determined by the following Equations (2'), Equation (3'), and Equation (4'), respectively: [Mathematical Formula 1]

$$b = \frac{\sum_{i=1}^{n} X_i Y_i - n\overline{\overline{X}}\,\overline{\overline{Y}}}{\sum_{i=1}^{n} X_i^2 - n\overline{X}^2} \quad \cdots (2')$$

$$a = \overline{Y} - b\overline{X} \quad \cdots (3')$$

$\overline{X}$ and Y represent the sample mean of $X_i$ and $Y_i$, respectively, and [Mathematical Formula 2]

$$R^2 = \frac{\sum_{i=1}^{n} (\hat{Y}_i - \overline{Y})^2}{\sum_{i=1}^{n} (Y_i - \overline{Y})^2} \quad \cdots (4')$$

Here, $\hat{Y}_i = a + bX_i$ is satisfied.

2. The hollow porous membrane according to claim 1, wherein the membrane region A is formed from the outer surface toward the inside of the porous membrane layer.

3. The hollow porous membrane according to claim 1 or 2, wherein a maximum pore size of holes on a cutting plane at a depth of from 50 to 70 $\mu$m is less than 10 $\mu$m when the hollow porous membrane is cut at the depth.

4. The hollow porous membrane according to any one of claims 1 to 3, wherein the porous membrane layer includes polyvinylidene fluoride.

5. The hollow porous membrane according to claim 4, wherein a mass average molecular weight (Mw) of polyvinylidene fluoride is $2.0 \times 10^5$ or more and $1.2 \times 10^6$ or less.

6. The hollow porous membrane according to claim 4 or 5, wherein the hollow porous membrane is manufactured using a N,N-dimethylacetamide solution including particles having a particle size of 0.022 $\mu$m or more by $1.2 \times 10^{16}$ particles/cm$^3$ or less under a condition containing polyvinylidene fluoride at 5% by mass with respect to a total mass.

7. The hollow porous membrane according to any one of claims 4 to 6, wherein a molecular weight distribution (Mw/Mn) of polyvinylidene fluoride is 4.0 or less.

8. The hollow porous membrane according to any one of claims 1 to 7, comprising a cylindrical support, wherein the porous membrane layer is formed on an outer peripheral surface of the support.

9. The hollow porous membrane according to claim 8, wherein the support is a hollow cylindrical string-like material including a filament.

10. The hollow porous membrane according to claim 9, wherein the support is a cylindrical knitted string support obtained by knitting a fiber into a cylindrical shape and subjecting the knitted string to a heat treatment.

11. The hollow porous membrane according to claim 10, wherein the filament includes polyester.

12. The hollow porous membrane according to claim 10 or 11, wherein the filament is a multifilament.

22

13. The hollow porous membrane according to claim 12, wherein a fineness of the multifilament is from 20 to 500 dtex.

14. The hollow porous membrane according to any one of claims 1 to 13, wherein an outer diameter of the hollow porous membrane is from 0.8 to 5 mm.

15. A method for manufacturing a hollow porous membrane that is manufactured using a membrane-forming stock solution containing a thermoplastic resin and a solvent, the membrane-forming stock solution having a turbidity of 30 NTU or less.

# FIG. 1

FIG. 2

FIG. 3

FIG. 4

FIG. 5

**INTERNATIONAL SEARCH REPORT**

<table>
<tr><td>International application No.</td></tr>
<tr><td>PCT/JP2014/077072</td></tr>
</table>

A. CLASSIFICATION OF SUBJECT MATTER
*B01D69/08*(2006.01)i, *B01D69/10*(2006.01)i, *B01D69/12*(2006.01)i, *B01D71/34*
(2006.01)i

According to International Patent Classification (IPC) or to both national classification and IPC

B. FIELDS SEARCHED

Minimum documentation searched (classification system followed by classification symbols)
B01D61/00-71/82, B01D53/22, C02F1/44

Documentation searched other than minimum documentation to the extent that such documents are included in the fields searched
Jitsuyo Shinan Koho          1922-1996   Jitsuyo Shinan Toroku Koho   1996-2014
Kokai Jitsuyo Shinan Koho    1971-2014   Toroku Jitsuyo Shinan Koho   1994-2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2009-517199 A  (Koron Industries Inc.),<br>30 April 2009 (30.04.2009),<br>claims; paragraph [0028]; examples 1 to 4<br>& AU 2006321466 A1      & CA 2630418 A1<br>& CN 101316647 A        & EP 1960091 A1<br>& ES 2397363 T3         & TW 00I341746 B<br>& US 2008/0305290 A1    & WO 2007/064123 A1 | 1-5,7-10,<br>12-14<br>6,11,15 |
| X<br>Y | JP 62-152508 A  (Asahi Chemical Industry Co.,<br>Ltd.),<br>07 July 1987 (07.07.1987),<br>claims; page 4, upper right column, lines 3 to<br>12; example 1<br>(Family: none) | 15<br>6,15 |

☒ Further documents are listed in the continuation of Box C.       ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
18 December 2014 (18.12.14)

Date of mailing of the international search report
13 January 2015 (13.01.15)

Name and mailing address of the ISA/
Japan Patent Office

Authorized officer

Facsimile No.

Telephone No.

Form PCT/ISA/210 (second sheet) (July 2009)

27

**INTERNATIONAL SEARCH REPORT**

| International application No. |
| --- |
| PCT/JP2014/077072 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>Y | JP 57-087326 A  (Nippon Zeon Co., Ltd.),<br>31 May 1982 (31.05.1982),<br>page 2, lower right column, line 18 to page 3,<br>lower left column, line 15<br>(Family: none) | 15<br>6,15 |
| Y<br>A | JP 2008-126199 A  (Mitsubishi Rayon Co., Ltd.),<br>05 June 2008 (05.06.2008),<br>claims; paragraph [0058]<br>(Family: none) | 11<br>1-10,12-15 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013213674 A
- JP 2006224051 A
- JP 2009240899 A
- JP 2009219979 A
- JP 2003225542 A
- JP 2012082396 A

### Non-patent literature cited in the description

- *Japan Society of Rheology Journal,* 2000, vol. 28 (3), 99-103